# EUROPEAN PATENT SPECIFICATION

(11) **EP 4 727 299 B1**
(45) Date of publication and mention of the grant of the patent: **19.08.2026**
(21) Application number: 25732307.1
(22) Date of filing: 21.02.2025
(51) Int. Cl.: H10F 19/80, C03C 17/00, C03C 17/34

(54) **TRANSPARENT COLORED-GLAZED PANEL AND COLORED PHOTOVOLTAIC MODULE**
TRANSPARENTE FARBGLASSCHEIBE UND FARBIGES FOTOVOLTAISCHES MODUL
PANNEAU VITRÉ COLORÉ TRANSPARENT ET MODULE PHOTOVOLTAÏQUE COLORÉ

(30) Priority: 22.08.2024 CN 202411160048
(43) Date of publication of application: 15.04.2026
(73) Proprietor: Hangzhou Bomei Solar Energy Technology Co., Ltd, Hangzhou, Zhejiang 311121 (CN); Hangzhou Bomei Green Energy Technology Co., Ltd., Hangzhou, Zhejiang 311399 (CN)
(72) Inventor: HE, Ping, Hangzhou, Zhejiang 311121 (CN); WANG, Jun, Hangzhou, Zhejiang 311121 (CN); XIN, Guoli, Hangzhou, Zhejiang 311121 (CN); WANG, Zhengzheng, Hangzhou, Zhejiang 311399 (CN); SHEN, Fei, Hangzhou, Zhejiang 311399 (CN)
(74) Representative: Gleiss Große Schrell und Partner mbB
(86) International application number: PCT/CN2025/078379
(87) International publication number: WO 2026/040365

(56) References cited:
- CN-A- 113 193 065
- CN-A- 116 799 086
- CN-U- 216 849 955
- JP-A- 2008 201 624
- JP-A- 2014 152 281
- KR-A- 20210 102 795
- KR-B1- 102 253 483
- KR-B1- 102 265 267
- US-A1- 2012 009 382

## Description

This patent application claims priority to a Chinese Patent Application No. 202411160048.9, entitled "COLORED PHOTOVOLTAIC COMPONENT", filed with the China National Intellectual Property Administration on August 22, 2024.

### TECHNICAL FIELD

The present disclosure relates to the field of solar energy technology, particularly to a transparent colored glazed panel and a colorful photovoltaic component.

### BACKGROUND

Colored building-integrated photovoltaic (BIPV) represents the integration of photovoltaic power generation with building decoration, enabling power generation while satisfying demands of aesthetic design in buildings and harmoniously blending with the surrounding environment.

The existing colored photovoltaic components generally include: stacked in sequence, a transparent colored panel, a transparent adhesive layer A, a cell layer, an adhesive layer B, and a back plate. The transparent colored panel includes a glass panel and a colored coating applied to its surface. There are two primary technical routes for the colored coating: high-temperature tempered colored glaze and low-temperature cured colored coating. For instance, Chinese invention patent publication CN113087406A discloses a high-temperature tempered colored photovoltaic glass panel and its production method; Chinese invention patent publication CN110606668A discloses a method for producing a dual curing color-changing solar glass panel with surrounding scenery with a low-temperature cured colored coating. A color-changing ink with surrounding scenery is applied to a solar glass panel, preheated at low temperature, then cured by ultraviolet irradiation, and finally cured by IR infrared heating to obtain the color-changing solar glass panel with surrounding scenery.

The high-temperature tempered colored glaze primarily consists of inorganic material (glass powder/inorganic pigment). By heating at high temperature (680-720 °C), the glass powder melts on the surface of the glass, forming a high-hardness (at least 6H) glaze layer, which can withstand impacts from wind and sand, and hail, and is resistant to UV aging. The process for forming the high-hardness glaze layer is well-established. However, it has disadvantages, including poor acid resistance, difficulty in color matching, low transmittance of the glaze layer, reduced impact strength of the glass, and a negative impact on the component's power generation efficiency. These drawbacks are determined by the properties of the high-temperature glaze layer material. Glass powder (quartz sand/soda ash) contains alkaline substances. If the tempered coating is applied to the outer side of the curtain wall glass, it could not withstand long-term (more than 10 years) acid rain erosion, and the coating is prone to fading and large-scale peeling.

The low-temperature curing process involves low-temperature baking and UV photocuring, which combines highly transparent weather-resistant resin with structural color pigments such as pearlescent powders. The low-temperature coating has the advantages of high transmittance, bright color, fade resistance, and convenience in color matching. However, it has several disadvantages, including low coating hardness (3-4H). When the low-temperature cured colored coating is applied to the outer side of glass, it cannot withstand long-term mechanical erosion by wind and sand, hail, etc.

To avoid discoloration or peeling of colored coatings caused by wind, sunlight, and acid rain erosion, thereby preventing safety accidents, the vast majority of colored coatings are applied to the inner sides of photovoltaic glass panels. Due to the transparent glass on the surfaces of colored photovoltaic components, which lacks the natural texture, three-dimensional depth, and metallic texture of traditional building materials such as granite, marble, and metal aluminum plates, the decorative effect is poor. When such photovoltaic components are directly installed on building curtain walls or roofs, light pollution inevitably occurs, which is also a long-standing defect of traditional glass curtain walls.

Applying a colored coating to the outward surface of a glass panel in a photovoltaic component exposed to air is a fundamental way to address light pollution caused by glass curtain walls and achieve the colorization of solar products. However, colored coating materials must meet very stringent requirements, including 25 years of no fading, no peeling, low transmittance attenuation, and no significant reduction in power generation efficiency, while also being resistant to acid rain, wind, and sand erosion. This means the coating must combine the advantages of high-hardness (at least 6H), impact resistance, and long-term UV aging resistance of a high-temperature inorganic tempered glaze layer, as well as the advantages of high transparency, resistance to acid rain erosion, rich color, and convenience in color matching of a low-temperature coating.

KR102265267B1 discloses a color solar module applicable to a building and, more specifically, a color solar module which easily adjusts a color, shows high color visibility while simultaneously maintaining high solar power generation efficiency and prevents discoloring even after a long period of use.

KR102253483B1 discloses a color photovoltaic module applicable to buildings and having improved efficiency and, more particularly, a color photovoltaic module capable of maintaining a high level of photovoltaic efficiency while easily controlling color. The color photovoltaic module includes a front glass, a color coating layer, a filler layer, a plurality of shingled photovoltaic cells, one or more connecting ribbons, and a back sheet or tempered glass.

KR20210102795A discloses a colored glass for a solar module, and more specifically, a colored glass for a solar module including: glass; a colored layer coated on one side of the glass; and an anti-reflection layer coated on the other side of the glass.

JP2008201624A discloses a method for manufacturing sheet glass with a colored layer, including the steps of: applying a composition, which contains polysilazane, pigment fine particles having ≤200 nm average particle size and an organic solvent, to at least one surface of a glass substrate; and hardening the applied composition.

Therefore, it is highly significant to develop a new material and innovative production process that combines the advantages of high-temperature tempered coatings and low-temperature cured coatings, while also addressing the quality defects of both, and ensuring that the outer coating of photovoltaic glass has a service life of 50 years, matching that of building curtain walls."

### SUMMARY

In view of this, the present disclosure provides a transparent colored glazed panel and a colored photovoltaic component. The present disclosure not only solves the problem of light pollution in existing colored photovoltaic components, but also combines the advantages of high-temperature tempered coatings and low-temperature cured coatings. Transparent colored glazed panel exhibits excellent performance of high hardness, high transparency, excellent fastness, superior weather resistance, acid and alkali resistance, scratch resistance, and stain resistance. It effectively protects the colored coating from fading, peeling, erosion by acid rain, ultraviolet radiation, and wind and sand, and endows the photovoltaic component with a long service life.

The present disclosure provides the following technical solutions:

A colored photovoltaic component is provided, and the invention is set out in the appended set of claims.

An inward-side surface of the glass substrate refers to the side adjacent to the transparent adhesive layer A, and the outward-side surface of the glass substrate refers to the side away from the transparent adhesive layer A. The transparent glaze layer is in direct contact with the external environment.

In the present disclosure, the colored photovoltaic component has non-glass texture characteristics; that is, when viewed from the outer surface of the component, the pattern of the colored coating is seen first, rather than the transparent glass. The colored coating could present a strong metallic texture, and through pattern design and different printing processes, it could also endow the surface of the colored coating with artistic texture and a three-dimensional effect. Furthermore, it also solves the issue of light pollution caused by the glass outer surfaces of existing photovoltaic components.

In some embodiments, the transparent colored coating is a high-temperature tempered colored glaze layer, a low-temperature cured colored coating, or an ultraviolet (UV)-cured colored coating.

The main components of conventional tempered colored glazes are quartz sand (silicon dioxide) and soda ash, which are melted at high temperatures (600-720 °C) onto a surface of the glass. Despite the advantages of high hardness, scrubbing resistance, and UV aging resistance, they cannot withstand long-term acid rain erosion. This is because acidic components in acid rain would neutralize alkaline components in tempered glaze layer(s), causing the colored glaze layer to change color or shed over large areas. Low-temperature cured or UV-cured colored coatings exhibit high transparency and excellent acid resistance, but their UV aging resistance is inferior to that of inorganic colored glazes. Additionally, due to the lower hardness and poor scrubbing resistance, they could not withstand long-term mechanical impacts, such as those from wind and sand, hail, etc.

In the present disclosure, the transparent colored coating in the colored photovoltaic component is located on the outer surface of the glass panel component, overcoming the glass texture defect found in traditional photovoltaic components used as building materials. In addition to the transparent colored coating, a transparent glaze layer primarily composed of silicon dioxide is applied as a protective layer. The transparent glaze layer is bonded to the colored coating via covalent bonds, ensuring high adhesion strength and excellent properties of high hardness, high transparency, superior weather resistance, acid and alkali resistance, scratch resistance, and stain resistance. This protective layer effectively protects the colored coating from fading, peeling, and erosion by acid rain, UV, wind, and sand, and overcomes the light pollution caused by reflection and refraction from glass panels in traditional photovoltaic components, while also endowing the photovoltaic component with a long service life.

In some embodiments, the mass percentage of the silicon dioxide in the transparent glaze layer is at least 70%.

In some embodiments, the transparent glaze layer has a hardness of at least 4H; preferably, the transparent glaze layer has a hardness of at least 6H; more preferably, the transparent glaze layer has a hardness of at least 8H.

In some embodiments, the transparent glaze layer exhibits a transmittance of at least 80% in an ultraviolet region of 260-380 nm, a transmittance of at least 93% in a visible light region of 380-780 nm, and a transmittance of at least 90% in an infrared region of 780-2,500 nm.

In some embodiments, the transparent colored coating and the transparent glaze layer covering the coating outward-side surface are subjected to high-pressure water vapor cooking at a pressure of 2 atmospheres for 48 hours, afterward, the ultraviolet irradiation resistance thereof as a whole is tested according to GB/T30984.1-2015, with the transmittance attenuation not more than 1% and the chromatic aberration value attenuation not more than 1.0.

In some embodiments, the transparent glaze layer exhibits heat resistance at a temperature of 400 °C.

The molecular chain of polysilazane contains Si-NH-Si polar structures, which can form covalent bonds with most substrates (e.g., glass, metal, ceramic, plastic, etc.), resulting in excellent adhesion force. After curing of polysilazane, a three-dimensional cross-linked glaze layer with silicon dioxide as a main component is formed. This glaze layer has components similar to those of quartz glass or ceramic, exhibiting high surface hardness and transmittance, and excellent physical and chemical properties, such as heat resistance, UV resistance, acid resistance, and adhesion force.

In some embodiments, the auxiliary agent is a transparent particle filler; the auxiliary agent has a particle size of 10 nm to 10 µm; preferably, the auxiliary agent has a particle size of 100 nm to 7 µm, and more preferably 1 µm to 5 µm.

The auxiliary agent has the functions of antiglare, astigmatism, matting, wear resistance, etc., and could also reduce the internal stress during the coating curing to prevent coating cracking.

In some embodiments, the auxiliary agent is at least one selected from the group consisting of a silica powder, a silicon micropowder, and a glass powder.

The glaze coating contains polysilazane resin as a main component. In some embodiments, the polysilazane has a molecular weight of 100-15,000 g/mol, and a viscosity of 10-10,000 cps/25 °C.

In some embodiments, the polysilazane includes organic or inorganic polysilazane, such as organic polysilazane Durazane^{®} 1500 Rapid Cure and Durazane^{®} 1500 Slow Cure, and inorganic polysilazanes such as AZ NN 120-20 and AZ NAX 120-20 from Merck; siloxane-modified polysilazane (such as XSC-N0701), heterogeneous element-modified polysilazane (e.g., XSC-N0801), and pre-crosslinked polysilazane XSC-N0901 from X-SiliCon Advanced Materials Co., Ltd. China; 8024PV211, 8808PV11, and 8804PV11 from Shanghai Kuberd; ZG-02 and ZG-107 from China Silicon new materials Co., Ltd.; and methyl polysilazane resin PSN1/PSN2 (having a molecular weight of 600-1,000 g/mol) from Qinyang Guoshun, etc.

After being applied to the substrate surface, polysilazane undergoes intense reactions with moisture in the air, composite resin(s), and active groups on the surface of the substrate. It could be cured by crosslinking with moisture in the air at room temperature, and the curing process can be accelerated by heating or UV irradiation.

The higher degree of conversion of polysilazane coating to silicon dioxide results in that the the performance of the formed glaze layer is closer to that of quartz glass. Consequently, the surface hardness and transmittance of the glaze layer are higher, and its physical and chemical properties such as heat resistance, UV resistance, acid resistance, and adhesion force are more excellent. The degree of conversion of polysilazane to silica is closely related to curing process conditions and sequence, which in turn affects the physical and chemical properties such as hardness and adhesion force of the glaze layer.

The air humidity and curing temperature have significant impacts on the curing effect. Higher humidity leads to a faster curing speed, and releasing of ammonia and other small molecule compounds during the process. Ultraviolet irradiation promotes more thorough curing of the glaze layer, resulting in higher hardness. More complete curing of polysilazane results in a larger silicon dioxide content in the coating, making its performance closer to that of quartz, with higher surface hardness, and better physical and chemical properties such as heat resistance and UV resistance.

The curing reaction mainly involves the hydrolysis and oxidation of Si-NH-Si. The Si-groups in polysilazane react with -OH groups on the substrate surface to form Si-O bonds. The NH- groups react with polar groups of the substrate or water in the air to release NH₃ and form a three-dimensional cross-linked glaze layer primarily composed of silicon dioxide as a main component, which has a similar component to that of quartz glass or ceramics.

In some embodiments, the dry curing is performed for 1 minute to 168 hours.

In some embodiments, a photocuring process is performed or not after the wet curing; and the photocuring process includes: irradiating the wet-cured glaze layer with ultraviolet to achieve still further curing.

During the dry curing, the relative humidity is kept low to promote the formation of the Si-O bonds by the reaction between Si and -OH groups on the surface of the substrate. Polysilazane resin preferentially reacts with hydroxyl or other polar groups on the substrate surface, enabling the transparent glaze layer to form covalent bonds with the substrate and thus enhancing adhesion strength. During the dry curing, it is undesirable that a large number of polar groups such as Si-NH-Si in the coating undergo intense hydrolysis and oxidation with water in air, releasing a large amount of ammonia and other small molecule compounds, thus affecting the adhesion force between the coating and the substrate. The higher humidity would cause more intense reaction, thereby releasing more ammonia and small molecule compounds, and the coating thus solidifies faster, which would have an adverse effect on the adhesion force of the coating. During the dry curing, by controlling humidity and temperature, the curing reaction is mainly relied on chemical reaction(s) between polysilazane and active groups on the substrate surface, resulting in a glaze layer that forms covalent bonds with the substrate and exhibits enhanced adhesion strength.

After the dry curing, the adhesion force between the transparent glaze layer and the substrate surface could reach 100%, but the curing process is not complete with surface hardness of only 3-4H. The coating scraped off by the blade is soft and strip-shaped. After the dry curing, a distinct ammonia smell could be smelled, indicating that there are still many active groups in the coating that have not been reacted. Therefore, further wet curing of the transparent glaze layer is required after dry curing.

During the wet curing, high humidity and high pressure facilitate the entry of moisture into the cured coating. The moisture reacts with NH- to release NH₃, and the silicon-containing polymer is fully converted into silicon dioxide. The hardness of the glaze layer could reach 5-6H, and the coating scraped off by the blade is in the form of powder.

In some embodiments, the wet curing is performed by cooking in water for 5 minutes to 180 minutes under the following conditions: a relative humidity of 100%, a temperature of 90-180 °C, and a pressure of 0.8-3 atmospheres; or by steaming in water vapor for 1 minute to 120 minutes under conditions: a relative humidity of 100%, a temperature of 90-180 °C, and a pressure of 0.8-3 atmospheres.

After boiling water cooking or pressure steam treatment, water rapidly penetrate the glaze layer, and residual active groups in the polysilazane glaze layer could quickly react with the moisture. Therefore, the product after the wet curing emits little to no ammonia odor, indicating that the curing process is nearly complete.

In some embodiments, the photocuring process includes: irradiating the wet-cured glaze layer with ultraviolet light with a wavelength of 250-450 nm and a light intensity of 250-5,000 mJ/cm².

The photocuring process, which involves irradiating the glaze layer with ultraviolet light with a wavelength of 250-450 nm, results in more thorough curing and higher hardness of the glaze layer, thereby enhancing the glaze layer's performance. UV irradiation could induce ceramization of polysilazane, mainly by crosslinking among silicon-hydrogen bonds, double bonds, and nitrogen-hydrogen bonds. The shorter wavelength and higher energy of the UV irradiation result in a faster ceramization rate of the glaze layer. After photocuring, the hardness of the glaze layer reaches 7-9H, the coating scraped off by the blade is in the form of fine powder. The glaze layer also exhibits optimal acid resistance, high-temperature resistance, and UV yellowing resistance. More thorough hydrolysis of polysilazane results in a more complete release of ammonia, thereby resulting in lower N content in the transparent glaze layer, and enhanced acid resistance.

In some embodiments, the photocuring is performed at a relative humidity of 20-95%, and a temperature of not higher than 100 °C.

A higher temperature and higher humidity means a faster curing reaction in the glaze layer. The polysilazane on the surface of the glaze layer first hydrolyzes and releases ammonia gas when exposed to moisture, leading to cross-linking and curing. Lower humidity and higher temperature are more conducive to the formation of covalent bonds between the silazane and the glass substrate, improving adhesion force. In the later stage of the reaction, raising temperature and humidity could promote more thorough curing; increasing the pressure makes it easier for water molecules to penetrate into the interior of the glaze layer, resulting in a higher conversion rate into silicon dioxide in the glaze layer, fewer residual active groups, greater hardness, and better high-temperature and weather resistance. Therefore, different humidities, temperatures, and pressures should be applied at different stages to cure the polysilazane by steps, ensuring optimal performance of the glaze layer.

In the present disclosure, after step (1) (dry curing), the semi-cured glaze layer (i.e., the dry-cured glaze layer) is further subjected to step (2) (wet curing), or after both step (1) and (2), the semi-cured glaze layer is subjected to step (3) (photocuring).

Wet curing could not be conducted directly on the polysilazane coating without preceding dry curing, otherwise even if the hardness of the glaze layer is improved; the adhesion force of the glaze layer to the substrate surface is poor.

For the colored coating, applying it too thickly in a single layer is not recommended, as it may lead to issues such as cracking, incomplete curing, or a surface-dry but inner-wet condition. The polysilazane resin in contact with the substrate surface first reacts with the silicon hydroxyl groups on the substrate surface to form silicon-oxygen bonds, thereby forming an inorganic glaze layer of silicon oxide bonded to the substrate surface via covalent bonds. If a too thick glaze coating is formed in a single layer, the surface of the glaze coating reacts with moisture in the air and solidifies to form a shell, which would hinder the further curing of the polysilazane resin inside, resulting in poor hardness, high-temperature resistance, and UV aging resistance of the polysilazane glaze layer.

In some embodiments, the transparent colored coating and the transparent glaze layer each independently have a thickness of 2-50 µm, preferably 3-20 µm.

The transparent colored coating and the transparent glaze layer may be applied using any one or two common methods, such as spray coating, shower coating, slit coating, scraping coating, screen printing, spin coating, dip coating, inkjet printing, roller coating, etc.

Compared with existing technologies, the beneficial effects of some embodiments of the present disclosure are as follows:
(1) In the colored photovoltaic component of the present disclosure, a colored coating is applied to outer surface of the glass panel, which solves the glass texture defect in photovoltaic component used as building materials, reduces chromatic aberration in the component's appearance caused by solar cells, enhances the overall aesthetic appeal of the product, and also eliminates the light pollution caused by the glass outer surface of the existing photovoltaic components.
(2) In the colored photovoltaic component of the present disclosure, a transparent glaze layer formed by curing polysilazane covers the surface of the colored coating. The transparent glaze layer composed primarily of silicon dioxide exhibits excellent properties comparable to that of quartz glass or ceramic glaze layer, and is covalently bonded with polar groups on the surface of the colored coating, resulting in strong adhesion and excellent properties such as high hardness, high transparency, superior weather resistance, acid and alkali resistance, scratch resistance, and stain resistance. It effectively protects the colored coating from fading, peeling, erosion caused by acid rain, ultraviolet, wind and sand, and endows the solar module with a superior long service life.

### DETAILED DESCRIPTION OF THE EMBODIMENTS

The following provides a further detailed description of the present disclosure displayed with the accompanying drawings and examples. It should be noted that the examples described below are for illustrative purposes only and should not be construed as limiting the scope of the disclosure.

### Example 1

A golden tempered colored glazed panel, which included a colored glaze layer composed of a golden bottom layer and a transparent gloss layer, was produced according to the following procedures:
A golden tempered glaze composition, with a total weight thereof being regarded as 100 parts, was composed of the following components:
20 parts of transparent ink 7020 (from Denbishi screen tech (Kunshan) Co., Ltd, China),
75 parts of transparent glass powder (with a melting point of 520-580 °C), and
5 parts of golden pearly pigment (KC319).

Preparation method of the golden tempered glaze composition: 20 parts of the transparent ink 7020 and 75 parts of the transparent glass powder were weighed and ground using a three-roller grinding machine to achieve a particle size of less than 10 µm, and 5 parts of the golden pearly pigment were finally added thereto. A resulting mixture was stirred evenly for later use.

A transparent gloss composition was composed of:
95 parts of polysilazane XSC-N0901; and
5 parts of silica powder (3 µm).

Preparation method of the transparent gloss composition: 95 parts of the polysilazane XSC-N0901 and 5 parts of the silica powder were weighed and placed into a stirring container, nitrogen gas was introduced therein, and a resulting mixture was stirred evenly, and then sealed for later use.

### (1) Glaze composition applying

The golden tempered glaze composition, which had been well-mixed in above procedures, was screen printed using a 200-mesh screen onto a surface of a photovoltaic glass (5 mm in thick), forming a golden coating with a dry film thickness of 10 µm.

### (2) Glaze coating tempering

A resulting applied golden coating was tempered at a temperature of 680-720 °C for 180 seconds to obtain a golden glass panel.

### (3) Gloss composition applying

The transparent gloss composition, which had been well-mixed in above procedures, was sprayed onto a surface of the golden glass panel to form a transparent coating with a thickness of 10 µm.

### (4) Gloss coating curing

Dry curing: the golden glass panel with the transparent gloss composition sprayed thereon was first cured for 72 hours under conditions: a relative humidity of 35% and a temperature of 45 °C, to achieve preliminary curing of the transparent coating.

Wet curing: the golden glass panel with the preliminarily-cured coating thereon was cooked in boiling water for 2 hours under conditions: a relative humidity of 100% and a temperature of 100 °C to further convert a polysilazane coating into a silica coating. The coating performance is shown in Table 1.

### Example 2

A white glazed glass panel, with a colored glaze layer composed of a low-temperature cured colored glaze bottom layer and a transparent gloss layer, was produced according to the following procedures:

A white thermosetting coating composition, with a total weight thereof being regarded as 100 parts, was composed of the following components:
70 parts of acrylic copolymer resin 1619;
25 parts of isocyanate curing agent H-100; and
5 parts of white pearly pigment (KC8100).

Preparation method of the white thermosetting coating composition: 70 parts of the acrylic copolymer resin 1619 (with a hydroxyl content of 55 mg KOH/g, a molecular weight of 4,000 g/mol, and an acid value of not more than 20 mg KOH/g), 25 parts of the isocyanate curing agent H-100 (from Wanhua Chemical), and 5 parts of the white pearly pigment (KC8100) were placed in a stirring container, and a resulting mixture was stirred evenly for later use.

A transparent gloss composition, with a total weight thereof being regarded as 100 parts, was composed of the following components:
92 parts of polysilazane resin 8024PV211; and
8 parts of silicon micropowder (2 µm).

Preparation method of the transparent gloss composition: 92 parts of the polysilazane resin 8024PV211 and 8 parts of the silicon micropowder were weighed and placed into a stirring container, nitrogen gas was introduced therein, and a resulting mixture was stirred evenly, and then sealed for later use.

### (1) Glaze composition applying

The mixed white thermosetting coating composition was screen printed by a 200 mesh screen printing onto a surface of a photovoltaic glass (5 mm in thickness) to form a white coating with a dry film thickness of 10 µm.

### (2) Glaze coating curing

A resulting printed white coating was heated and cured at 180 °C for 15 minutes to obtain a white glass panel.

### (3) Gloss composition applying

The transparent gloss composition was sprayed onto a surface of the white glass panel to form a gloss coating with a thickness of 10 µm.

### (4) Gloss coating curing

Dry curing: the white glass panel coated with the transparent gloss composition was first cured for 0.2 hours under conditions: a relative humidity of 35% and a temperature of 185 °C, to preliminarily cure the gloss coating.

Wet curing: the white glass panel with a resulting preliminarily-cured gloss coating thereon was water-vapor cooked at a relative humidity of 100% and a temperature of 120 °C for 60 minutes to convert a polysilazane coating into a silica coating. The coating performance is shown in Table 1.

### Example 3

A red glazed glass panel, with a colored glaze layer composed of a low-temperature cured colored glaze bottom layer and a transparent gloss layer, was produced according to the following procedures:
A red thermosetting coating composition, with a total weight thereof being regarded as 100 parts, was composed of the following components:
65 parts of hydroxy acrylate resin (BS8270);
20 parts of isocyanate curing agent H-100;
9 parts of polyurethane acrylate EB220;
1 part of photosensitizer 1173;
5 parts of red pearly pigment (KC815M5).

Preparation method of the red thermosetting coating composition: 65 parts of acrylate resin BS8270 (with a hydroxyl content of 100 mg KOH/g, an acid value of not more than 10-13 mg KOH/g, and a solid content of 70%), 20 parts of H-100 isocyanate curing agent (from Wanhua Chemical), 9 parts of hexafunctional polyurethane acrylate EB220, 1 part of 1173 photosensitizer, and 5 parts of pearly pigment (KC815M5) were weighed and placed in a stirring container, and a resulting mixture was stirred evenly for later use.

A transparent gloss composition, with a total weight thereof being regarded as 100 parts, was composed of the following components:
95 parts of inorganic polysilazane such as AZ NN 120-20; and
5 parts of silicon micropowder (2 µm).

Preparation method of the transparent gloss composition: 95 parts of the inorganic polysilazane such as AZNN120-20 and 5 parts of the silicon micropowder were weighed and placed into a stirring container, nitrogen gas was introduced therein, and a resulting mixture was stirred evenly, and then sealed for later use.

### (1) Glaze composition applying

The mixed red thermosetting coating composition was screen printed with a 200 mesh screen printing onto a surface of a photovoltaic glass (5 mm in thick) to form a red coating with a dry film thickness of 10 µm.

### (2) Glaze coating curing

The printed red coating was first cured by UV irradiation with an energy of 1800 mJ/cm² at a relative humidity of 55% and a temperature of 60 °C; and then a resulting irradiated coating was cured by IR heating at 180 °C for 30 minutes to obtain a red glass panel.

### (3) Gloss composition applying

The transparent gloss composition was sprayed onto a surface of the red glass panel to form a gloss coating with a thickness of 10 µm.

### (4) Gloss coating curing

Dry curing: the red glass panel with the transparent gloss composition sprayed thereon was first cured for 10 minutes under conditions: a relative humidity of 45% and a temperature of 175 °C, to preliminarily cure the gloss coating.

Wet curing: the red glass panel with a resulting preliminarily-cured gloss coating thereon was cooked in boiling water at a relative humidity of 100% and a temperature of 100 °C for 120 minutes to further cure a polysilazane coating and convert it into a silica coating.

Photocuring: the colored glazed glass after wet curing was irradiated with a UV lamp, with an energy of 2,500 mJ/cm², at a relative humidity of 55% and a temperature of 80 °C. The performance of a resulting coating after photocuring is shown in Table 1.

### Example 4

A white glazed glass panel, with a glaze layer composed of a low-temperature cured colored glaze bottom layer and a transparent gloss layer, was produced according to the following procedures:
A white thermosetting coating composition, with a total weight thereof being regarded as 100 parts, was composed of:
70 parts of acrylic copolymer resin 1619;
25 parts of isocyanate curing agent H-100; and
5 parts of white pearly pigment (KC8100).

Preparation method of the white thermosetting coating composition: 70 parts of the acrylic copolymer resin 1619 (with a hydroxyl content of 55 mg KOH/g, a molecular weight of 4,000 g/mol, and an acid value of not more than 20 mg KOH/g), 25 parts of H-100 isocyanate curing agent (from Wanhua Chemical), and 5 parts of pearly pigment (KC8100) were weighed and placed in a stirring container, and a resulting mixture was stirred evenly for later use.

A transparent gloss composition, with a total weight thereof being regarded as 100 parts, was composed of the following components:
100 parts of organic polysilazane Durazane^{®} 1500 Rapid Cure.

### (1) Glaze composition applying

The mixed white thermosetting coating composition was screen printed with a 200 mesh screen printing onto a surface of a photovoltaic glass (5 mm in thickness) to form a white coating with a dry film thickness of 10 µm.

### (2) Glaze coating curing

The printed white coating was heated and cured at 180 °C for 15 minutes to obtain a white glass panel.

### (3) Gloss composition applying

The transparent gloss composition was sprayed onto a surface of the white glass panel to form a gloss coating with a thickness of 10 µm.

### (4) Gloss coating curing

Dry curing: the white glass panel with the transparent gloss coating sprayed thereon was naturally cured for 168 hours under conditions: a relative humidity of 55% and a temperature of 35 °C, to cure the gloss coating. The coating performance is shown in Table 1.

### Comparative Examples 1-3

Compared with Examples 1, 2, and 3, the transparent gloss composition was not sprayed onto the colored glazed glass (i.e., only steps (1) and (2) in Examples 1, 2, and 3 were performed, and steps (3) and (4) were not performed), while keeping all other conditions unchanged. The properties of the cured colored glazes were tested. The results are shown in Table 1.

### Comparative Example 4

A golden tempered colored glazed panel included a colored glaze layer composed of a golden bottom layer and a transparent gloss layer, and was produced according to the following procedures:
A golden tempered glaze composition, with a total weight thereof being regarded as 100 parts, was composed of the following components:
20 parts of transparent ink 7020 (from Denbishi screen tech (Kunshan) Co., Ltd, China);
75 parts of transparent glass powder (with a melting point of 520-580 °C); and
5 parts of golden pearly pigment (KC319).

Preparation method of the golden tempered glaze composition: 20 parts of the transparent ink 7020 and 75 parts of the transparent glass powder were weighed, and ground with a three-roller grinding machine to achieve a particle size less than 10 µm. Finally, 5 parts of the golden pearly pigment were added thereto, and a resulting mixture was stirred evenly for later use.

A transparent gloss composition:
95 parts of polysilazane XSC-N0901; and
5 parts of silica powder (3 µm).

Preparation method of the transparent gloss composition: 95 parts of the polysilazane XSC-N0901 and 5 parts of the silica powder were weighed and placed into a stirring container, nitrogen gas was introduced therein, and a resulting mixture was stirred evenly, and then sealed for later use.

### (1) Glaze composition applying

The above mixed golden tempered glaze composition was screen printed with a 200 mesh screen printing onto a surface of photovoltaic glass (5 mm in thick), forming a golden coating with a dry film thickness of 10 µm.

### (2) Glaze coating tempering

The applied golden coating was tempered at a temperature of 680-720 °C for 180 seconds to obtain a golden glass panel.

### (3) Gloss composition applying

The above mixed transparent gloss composition was sprayed onto a surface of the golden glass panel to form a transparent coating with a thickness of 10 µm.

### (4) Gloss coating curing

Wet curing: the golden glass panel with the gloss coating thereon was cooked in boiling water under conditions: a relative humidity of 100% and a temperature of 100 °C for 2 hours to directly convert a polysilazane coating into a silica coating. The coating performance is shown in Table 1.

### Evaluation method:

The performance of the colored glaze layer was tested according to JC/T-1006-2018-Tempered and heat-strengthened enamelled glass.

### PCT/48 hours aging test+UV radiation resistance performance UV120KW:

First, the colored glass with coating was placed in a high-pressure cooker at a pressure of 2 atmospheres (121 °C, 100%.RH saturated water vapor) and cooked for 48 hours, then the coating's resistance to ultraviolet radiation was tested according to clause 5.21 of standard GB/T30984.1-2015. The initial transmittance (%) and the transmittance (%) after testing of the coating were recorded. Then the transmittance attenuation (%) and the chromatic aberration value (△E) before and after irradiation were calculated.

The results are shown in Table 1.

**Table 1 Coating Performance of Colored Solar components.**

| Items | Example 1 | Example 2 | Example 3 | Example 4 | Comparative Example 1 | Comparative Example 2 | Comparative Example 3 | Comparative Example 4 |
|---|---|---|---|---|---|---|---|---|
| Coating hardness H | 8 | 6 | 7 | 5 | 8 | 3 | 3 | 8 |
| Adhesion force% | 100 | 100 | 100 | 100 | 100 | 100 | 100 | 20 |
| Transmittance% | 72 | 78 | 82 | 79 | 72 | 79 | 81 | 72 |
| Scrubbing resistance | No peeling | No peeling | No peeling | No peeling | No peeling | Colored glaze layer peeling | Colored glaze layer peeling | Gloss layer peeling |
| Acid resistance Transmittance attenuation% | 0.32 | 0.26 | 0.17 | 0.61 | 13.48 | 1.83 | 2.34 | 12.90 |
| PCT48+UV120 K chromatic aberration value (ΔE) | 0.16 | 0.45 | 0.82 | 0.52 | 5.79 | 2.63 | 1.9 | 4.82 |
| Transmittance attenuation% after PCT48+UV120 K | 0.56 | 0.72 | 0.89 | 1.02 | 2.88 | 1.71 | 2.68 | 2.46 |

From the results in Table 1, it can be seen that the hardness of the products coated with the gloss layer in Examples 1-4 is significantly higher than those of the colored glaze layer in Comparative Examples 2 and 3. Furthermore, the scrubbing resistance, acid resistance, chromatic aberration value (ΔE) after PCT48+UV120KW aging test, and transmittance are significantly better than those of Comparative Examples 1, 2, and 3, indicating that the gloss layer could significantly improve the performance of the colored bottom layer. The coating hardness of Comparative Example 1 is comparable to that of the tempered glass. In Comparative Example 4, the wet curing was directly performed without dry curing, resulting in that polar groups such as Si-NH-Si in polysilazane and moisture in the air undergo mainly intense hydrolysis and oxidation in the curing process of polysilazane, releasing a large amount of ammonia gas and other small molecule compounds, resulting in a higher degree of silicon dioxide. The cured gloss layer formed thereby has a higher hardness, but the chemical reactions between the polysilazane resin and the hydroxyl or other polar groups on the substrate surface are insufficient, leading to poor adhesion between the cured gloss layer and the substrate, which could not provide the required protection, resulting in significant chromatic aberration value and transmittance attenuation of the colored bottom layer.

## Claims

1. A transparent colored glazed panel, **characterized by** comprising:
a glass substrate;
a transparent colored coating covering an outward-side surface of the glass substrate; and
a transparent glaze layer covering an outward-side surface of the transparent colored coating,
wherein the transparent glaze layer is bonded to the transparent colored coating via covalent bonds;
the transparent glaze layer has a main component of silicon dioxide;
the transparent glaze layer is formed by curing a glaze coating comprising the following raw materials, in mass percentages:
90% to 100% of polysilazane, and 0 to 10% of an auxiliary agent;
the curing comprises subjecting the glaze coating to dry curing and then wet curing;
the dry curing is performed by curing the glaze coating under conditions: a relative humidity of not more than 55% and a temperature of 0 °C to 350 °C, to form a dry-cured glaze layer; and
the wet curing is performed by heating the dry-cured glaze layer under conditions: a relative humidity of not less than 95%, a temperature of 90 °C to 200 °C, and a pressure of 0.8 atmospheres to 3 atmospheres, to achieve further curing and form a wet-cured glaze layer; and
the transparent colored coating and the transparent glaze layer each independently have a thickness of 1 µm to 150 µm.

2. The transparent colored glazed panel as claimed in claim 1, wherein a mass percentage of the silicon dioxide in the transparent glaze layer is not less than 70%.

3. The transparent colored glazed panel as claimed in claim 1, wherein the transparent glaze layer has a hardness of not less than 4H.

4. The transparent colored glazed panel as claimed in claim 1 or 2, wherein the transparent glaze layer exhibits a transmittance of not less than 80% in an ultraviolet region of 260 nm to 380 nm, a transmittance of not less than 93% in a visible light region of 380 nm to 780 nm, and a transmittance of not less than 90% in an infrared region of 780 nm to 2,500 nm.

5. The transparent colored glazed panel as claimed in claim 1, wherein the transparent colored coating and the transparent glaze layer covering the outward-side surface of the transparent colored coating, after being subjected to high-pressure water vapor cooking at a pressure of 2 atmospheres for 48 hours, as a whole exhibit a transmittance attenuation of not more than 1% and a chromatic aberration value attenuation of not more than 1.0, each determined in an ultraviolet irradiation resistance test according to GB/T 30984.1-2015.

6. The transparent colored glazed panel as claimed in claim 1, wherein the polysilazane has a molecular weight of 100 g/mol to 15,000 g/mol and a viscosity of 10 cps to 10,000 cps at 25 °C.

7. The transparent colored glazed panel as claimed in claim 1, wherein the curing further comprises performing a photocuring process or not after the wet curing, the photocuring process comprising: irradiating the wet-cured glaze layer with ultraviolet to achieve still further curing.

8. The transparent colored glazed panel as claimed in claim 1, wherein the wet curing is performed by cooking in water for 5 minutes to 180 minutes under conditions: a relative humidity of 100%, a temperature of 90 °C to 180 °C, and a pressure of 0.8 atmospheres to 3 atmospheres.

9. The transparent colored glazed panel as claimed in claim 1, wherein the wet curing is performed by steaming in water vapor for 1 minute to 120 minutes under conditions: a relative humidity of 100%, a temperature of 90 °C to 180 °C, and a pressure of 0.8 atmospheres to 3 atmospheres.

10. The transparent colored glazed panel as claimed in claim 7, wherein the photocuring process comprises:
irradiating the wet-cured glaze layer with ultraviolet having a wavelength of 250 nm to 450 nm and an irradiation energy of 250 mJ/cm² to 5,000 mJ/cm².

11. The transparent colored glazed panel as claimed in claim 7 or 10, wherein the photocuring process is performed at a relative humidity of 20% to 95% and a temperature of not higher than 100 °C.

12. The transparent colored glazed panel as claimed in claim 1, wherein the auxiliary agent is a transparent particle filler.

13. The transparent colored glazed panel as claimed in claim 12, wherein the auxiliary agent is at least one selected from the group consisting of a silica powder, a silicon micropowder, and a glass powder.

14. The transparent colored glazed panel as claimed in claim 12 or 13, wherein the auxiliary agent has a particle size of 10 nm to 10 µm.

15. The transparent colored glazed panel as claimed in claim 1, wherein the transparent colored coating is a high-temperature tempered colored glaze layer or a low-temperature cured colored coating.

16. The transparent colored glazed panel as claimed in claim 1, wherein the transparent glaze layer exhibits heat resistance at a temperature of 400 °C.

17. A colored photovoltaic component, **characterized by** comprising: stacked in sequence and packaged,
the transparent colored glazed panel as claimed in any one of claims 1 to 16;
a transparent adhesive layer A;
a cell layer;
an adhesive layer B; and
a back plate.

## Patentansprüche

1. Transparente Farbglasscheibe, **gekennzeichnet durch** umfassend:
ein Glassubstrat;
eine transparente Farbbeschichtung, bedeckend eine nach außen weisende Oberfläche des Glassubstrats; und
eine transparente Glasurschicht, bedeckend eine nach außen weisende Oberfläche der transparenten Farbbeschichtung,
wobei die transparente Glasurschicht über kovalente Bindungen an die transparente Farbbeschichtung gebunden ist;
die transparente Glasurschicht Siliziumdioxid als Hauptbestandteil aufweist;
die transparente Glasurschicht durch Aushärten einer Glasurbeschichtung gebildet ist, umfassend die folgenden Rohstoffe in Massenprozent:
90 % bis 100 % Polysilazan und 0 % bis 10 % eines Hilfsstoffs;
das Aushärten ein Unterziehen der Glasurbeschichtung einem Trockenhärten und danach einem Nasshärten umfasst;
das Trockenhärten durch Aushärten der Glasurbeschichtung unter folgenden Bedingungen durchgeführt wird: eine relative Luftfeuchtigkeit von höchstens 55 % und eine Temperatur von 0 °C bis 350 °C, um eine trockengehärtete Glasurschicht zu bilden; und
das Nasshärten durch Erhitzen der trockengehärteten Glasurschicht unter folgenden Bedingungen durchgeführt wird: eine relative Luftfeuchtigkeit von mindestens 95 %, eine Temperatur von 90 °C bis 200 °C und ein Druck von 0,8 Atmosphären bis 3 Atmosphären, um ein weiteres Aushärten zu erreichen und eine nassgehärtete Glasurschicht zu bilden; und
die transparente Farbbeschichtung und die transparente Glasurschicht jeweils unabhängig voneinander eine Dicke von 1 µm bis 150 µm aufweisen.

2. Transparente Farbglasscheibe nach Anspruch 1, wobei ein Massenprozent des Siliziumdioxids in der transparenten Glasurschicht mindestens 70 % beträgt.

3. Transparente Farbglasscheibe nach Anspruch 1, wobei die transparente Glasurschicht eine Härte von mindestens 4H aufweist.

4. Transparente Farbglasscheibe nach Anspruch 1 oder 2, wobei die transparente Glasurschicht eine Transmission von mindestens 80 % in einem Ultraviolettbereich von 260 nm bis 380 nm, eine Transmission von mindestens 93 % in einem sichtbaren Bereich von 380 nm bis 780 nm und eine Transmission von mindestens 90 % in einem Infrarotbereich von 780 nm bis 2500 nm zeigt.

5. Transparente Farbglasscheibe nach Anspruch 1, wobei die transparente Farbbeschichtung und die transparente Glasurschicht, bedeckend die nach außen weisende Oberfläche der transparenten Farbbeschichtung, nachdem sie einem Hochdruck-Wasserdampfkochen bei einem Druck von 2 Atmosphären für 48 Stunden unterzogen wurden, insgesamt eine Transmissionsabschwächung von höchstens 1 % und eine chromatische Abweichungswertabschwächung von höchstens 1,0 zeigen, jeweils ermittelt in einem Ultraviolettbestrahlungs-Beständigkeitstest gemäß GB/T 30984.1-2015.

6. Transparente Farbglasscheibe nach Anspruch 1, wobei das Polysilazan eine Molekülmasse von 100 g/mol bis 15.000 g/mol und eine Viskosität von 10 cps bis 10.000 cps bei 25 °C aufweist.

7. Transparente Farbglasscheibe nach Anspruch 1, wobei das Aushärten ferner nach dem Nasshärten ein Durchführen eines Photohärtungsverfahrens oder nicht umfasst, wobei das Photohärtungsverfahren umfasst: Bestrahlen der nassgehärteten Glasurschicht mit Ultraviolett, um ein noch weiteres Aushärten zu erreichen.

8. Transparente Farbglasscheibe nach Anspruch 1, wobei das Nasshärten durch Kochen in Wasser für 5 Minuten bis 180 Minuten unter folgenden Bedingungen durchgeführt wird: eine relative Luftfeuchtigkeit von 100 %, eine Temperatur von 90 °C bis 180 °C und ein Druck von 0,8 Atmosphären bis 3 Atmosphären.

9. Transparente Farbglasscheibe nach Anspruch 1, wobei das Nasshärten durch Bedampfen in Wasserdampf für 1 Minute bis 120 Minuten unter folgenden Bedingungen durchgeführt wird: eine relative Luftfeuchtigkeit von 100 %, eine Temperatur von 90 °C bis 180 °C und ein Druck von 0,8 Atmosphären bis 3 Atmosphären.

10. Transparente Farbglasscheibe nach Anspruch 7, wobei das Photohärtungsverfahren umfasst:
Bestrahlen der nassgehärteten Glasurschicht mit Ultraviolett, aufweisend eine Wellenlänge von 250 nm bis 450 nm und eine Bestrahlungsenergie von 250 mJ/cm² bis 5.000 mJ/cm².

11. Transparente Farbglasscheibe nach Anspruch 7 oder 10, wobei das Photohärtungsverfahren bei einer relativen Luftfeuchtigkeit von 20 % bis 95 % und einer Temperatur von höchstens 100 °C durchgeführt wird.

12. Transparente Farbglasscheibe nach Anspruch 1, wobei der Hilfsstoff ein transparenter Partikelfüllstoff ist.

13. Transparente Farbglasscheibe nach Anspruch 12, wobei der Hilfsstoff mindestens einer ist, ausgewählt aus der Gruppe, bestehend aus einem Siliziumdioxidpulver, einem Siliziummikropulver und einem Glaspulver.

14. Transparente Farbglasscheibe nach Anspruch 12 oder 13, wobei der Hilfsstoff eine Partikelgröße von 10 nm bis 10 µm aufweist.

15. Transparente Farbglasscheibe nach Anspruch 1, wobei die transparente Farbbeschichtung eine hochtemperaturgehärtete farbige Glasurschicht oder eine niedrigtemperaturgehärtete Farbbeschichtung ist.

16. Transparente Farbglasscheibe nach Anspruch 1, wobei die transparente Glasurschicht bei einer Temperatur von 400 °C eine Wärmebeständigkeit zeigt.

17. Farbige Photovoltaikkomponente, **gekennzeichnet durch** umfassend: in Reihe gestapelt und verpackt,
die transparente Farbglasscheibe nach einem der Ansprüche 1 bis 16;
eine transparente Klebeschicht A;
eine Zellschicht;
eine Klebeschicht B; und eine Rückplatte.

## Revendications

1. Un panneau vitré coloré transparent, **caractérisé en ce qu'**il comprend:
un substrat en verre;
un revêtement coloré transparent recouvrant une surface du côté extérieure du substrat en verre; et
une couche de glaçure transparente recouvrant une surface du côté extérieure du revêtement coloré transparent,
dans lequel la couche de glaçure transparente est liée au revêtement coloré transparent par des liaisons covalentes;
la couche de glaçure transparente a pour composant principal le dioxyde de silicium;
la couche de glaçure transparente est formée par durcissement d'un revêtement de glaçure comprenant les matières premières suivantes, en pourcentages massiques:
90 % à 100 % de polysilazane et 0 % à 10 % d'un agent auxiliaire;
le durcissement comprend la soumission du revêtement de glaçure à un durcissement à sec puis à un durcissement humide;
le durcissement à sec est réalisé par durcissement du revêtement de glaçure dans des conditions: une humidité relative ne dépassant pas 55 % et une température de 0 °C à 350 °C, afin de former une couche de glaçure durcie à sec; et
le durcissement humide est réalisé par chauffage de la couche de glaçure durcie à sec dans des conditions: une humidité relative d'au moins 95 %, une température de 90 °C à 200 °C et une pression de 0,8 atmosphère à 3 atmosphères, afin d'atteindre un durcissement supplémentaire et de former une couche de glaçure durcie par voie humide; et
le revêtement coloré transparent et la couche de glaçure transparente ont chacun indépendamment une épaisseur de 1 µm à 150 µm.

2. Le panneau vitré coloré transparent selon la revendication 1, dans lequel le pourcentage massique de dioxyde de silicium dans la couche de glaçure transparente est d'au moins 70 %.

3. Le panneau vitré coloré transparent selon la revendication 1, dans lequel la couche de glaçure transparente a une dureté d'au moins 4H.

4. Le panneau vitré coloré transparent selon la revendication 1 ou 2, dans lequel la couche de glaçure transparente présente une transmittance d'au moins 80 % dans une région ultraviolette de 260 nm à 380 nm, une transmittance d'au moins 93 % dans une région de lumière visible de 380 nm à 780 nm et une transmittance d'au moins 90 % dans une région infrarouge de 780 nm à 2 500 nm.

5. Le panneau vitré coloré transparent selon la revendication 1, dans lequel le revêtement coloré transparent et la couche de glaçure transparente recouvrant la surface du côté extérieure du revêtement coloré transparent, après avoir été soumis à une cuisson à la vapeur d'eau à haute pression à une pression de 2 atmosphères pendant 48 heures, présentent dans leur ensemble une atténuation de transmittance inférieure ne dépassant pas 1 % et une atténuation de valeur d'aberration chromatique ne dépassant pas 1,0, chacune étant déterminée dans un test de résistance à l'irradiation ultraviolette selon GB/T 30984.1-2015.

6. Le panneau vitré coloré transparent selon la revendication 1, dans lequel le polysilazane a une masse moléculaire de 100 g/mol à 15 000 g/mol et une viscosité de 10 cps à 10 000 cps à 25 °C.

7. Le panneau vitré coloré transparent selon la revendication 1, dans lequel le durcissement comprend en outre la réalisation d'un procédé de photodurcissement ou non après le durcissement humide, le procédé de photodurcissement comprenant: l'irradiation de la couche de glaçure durcie par voie humide avec des ultraviolets afin d'atteindre un durcissement encore supplémentaire.

8. Le panneau vitré coloré transparent selon la revendication 1, dans lequel le durcissement humide est réalisé par cuisson dans l'eau pendant 5 minutes à 180 minutes dans des conditions: une humidité relative de 100 %, une température de 90 °C à 180 °C et une pression de 0,8 atmosphère à 3 atmosphères.

9. Le panneau vitré coloré transparent selon la revendication 1, dans lequel le durcissement humide est réalisé par traitement à la vapeur d'eau pendant 1 minute à 120 minutes dans des conditions: une humidité relative de 100 %, une température de 90 °C à 180 °C et une pression de 0,8 atmosphère à 3 atmosphères.

10. Le panneau vitré coloré transparent selon la revendication 7, dans lequel le procédé de photodurcissement comprend:
l'irradiation de la couche de glaçure durcie par voie humide avec des ultraviolets ayant une longueur d'onde de 250 nm à 450 nm et d'une énergie d'irradiation de 250 mJ/cm² à 5 000 mJ/cm².

11. Le panneau vitré coloré transparent selon la revendication 7 ou 10, dans lequel le procédé de photodurcissement est réalisé à une humidité relative de 20 % à 95 % et à une température ne dépassant pas 100 °C.

12. Le panneau vitré coloré transparent selon la revendication 1, dans lequel l'agent auxiliaire est une charge particulaire transparente.

13. Le panneau vitré coloré transparent selon la revendication 12, dans lequel l'agent auxiliaire est au moins l'un choisi dans le groupe constitué d'une poudre de silice, d'une micropoudre de silicium et d'une poudre de verre.

14. Le panneau vitré coloré transparent selon la revendication 12 ou 13, dans lequel l'agent auxiliaire a une taille de particules de 10 nm à 10 µm.

15. Le panneau vitré coloré transparent selon la revendication 1, dans lequel le revêtement coloré transparent est une couche de glaçure colorée trempée à haute température ou un revêtement coloré durci à basse température.

16. Le panneau vitré coloré transparent selon la revendication 1, dans lequel la couche de glaçure transparente présente une résistance à la chaleur à une température de 400 °C.

17. Un composant photovoltaïque coloré, **caractérisé en ce qu'**il comprend: empilés en séquence et conditionnés,
le panneau vitré coloré transparent selon l'une quelconque des revendications 1 à 16;
une couche adhésive transparente A;
une couche de cellules;
une couche adhésive B; et
une plaque arrière.
